# EUROPEAN PATENT APPLICATION

(11) **EP 2 077 445 A1**
(43) Date of publication of application: **08.07.2009**
(21) Application number: 06821862.7
(22) Date of filing: 13.10.2006
(51) Int. Cl.: G01N 21/76, G01N 33/543, G01N 35/00, G01N 33/553

(54) **METHOD FOR IDENTIFYING ABNORMAL STATE, ANALYTICAL APPARATUS, AND REAGENT**

(71) Applicant: Olympus Corporation, Tokyo 151-0072 (JP)
(72) Inventor: KUBOTA, Kiyotaka, Tokyo 151-0072 (JP); FURUSAWA, Yukihiro, Tokyo 151-0072 (JP); FUJIMORI, Koji, Tokyo 151-0072 (JP)
(74) Representative: von Hellfeld, Axel
(86) International application number: PCT/JP2006/320467
(87) International publication number: WO 2008/044311

(57) **Abstract**

The present invention, in an abnormality identifying method of identifying an abnormality detail in an analyzing apparatus that analyzes a specimen based on an optical measurement, is **characterized by**, for a reagent having a same function as an intermediate product produced during analysis processes, canceling a predetermined analysis process other than an analysis process to be verified for abnormality from among analysis processes with respect to the specimen, and identifying an abnormality based on a measurement result obtained by performing a same analysis process as an analysis process performed on the intermediate product as well as the analysis process to be verified for abnormality.

## Description

### TECHNICAL FIELD

The present invention relates to identifying an abnormal detail of an analyzing apparatus that analyzes a specimen based on an optical measurement.

### BACKGROUND ART

Analyzing apparatuses are used for tests in various fields such as immunological testing, biochemical testing, and blood transfusion testing because the analyzing apparatuses can simultaneously perform an analysis process on a large number of specimens and can analyze a lot of components quickly and highly accurately. For example, an analyzing apparatus which performs an immunological test arranges, respectively on a plurality of turntables, a reaction system which makes a specimen and a reagent react in a reaction vessel, a removing system which removes an unreacted substance in the reaction vessel, and a photometric system which measures an amount of a luminescence from an immune complex generated through the reaction between each reagent and specimen, and includes a plurality of dispensing/transporting systems each which dispenses or transports the specimen, the reagent, and a reaction liquid to each system to perform immunological tests for various targets to be analyzed (see Patent Document 1, for example).

Patent Document 1: Japanese Patent Application Laid-Open No. 2003-83988

### DISCLOSURE OF INVENTION

### PROBLEM TO BE SOLVED BY THE INVENTION

Conventionally, presence of abnormality in an analyzing apparatus is examined based on whether or not an analysis result obtained by actually performing a series of analysis processes on a standard specimen similarly to that on a normal specimen having a known analysis result coincides with the known analysis result. In other words, conventionally, an operator of the analyzing apparatus judges that when the analysis result obtained through an actual analysis on the standard specimen coincides with the known analysis result, the analyzing apparatus is operating normally without abnormality, and when the analysis result obtained through the actual analysis on the standard specimen does not coincide with the known analysis result, the analyzing apparatus has abnormality.

However, in the conventional method using the standard specimen, although the operator can recognize presence of abnormality in the analyzing apparatus, it is difficult to accurately identify in which process and which system in the analyzing apparatus the abnormality is present. Especially, an analyzing apparatus which performs an immunological test has a complicated configuration for performing analysis processes for various contents with different reaction times, reagents used, structures used, and operation timings of the systems, and therefore it is very difficult to accurately identify the abnormality.

As for dispensing accuracy in a dispensing/transporting system of an analyzing apparatus which performs a biochemical test, a reagent having predetermined absorbance characteristics is actually dispensed into the reaction vessel and verified based on a measurement result obtained by using a colorimetric method. However, since the analyzing apparatus which performs the immunological test does not include a colorimetric measurement unit, it is necessary for the operator to perform a complicated process of performing a colorimetric measurement by using a spectrophotometer separately from the analyzing apparatus, to verify the dispensing accuracy.

The present invention has been achieved in view of the drawbacks of the conventional techniques described above, and an object of the present invention is to provide an abnormality identifying method, an analyzing apparatus, and a reagent, which allow accurate and easy identification of abnormality in the analyzing apparatus.

### MEANS FOR SOLVING PROBLEM

To solve the above described problems and achieve the object, an abnormality identifying method according to the present invention of identifying an abnormality detail in an analyzing apparatus that analyzes a specimen based on optical measurement, includes: for a reagent having a same function as an intermediate product produced during analysis processes, canceling a predetermined analysis process other than an analysis process to be verified for abnormality from among analysis processes with respect to the specimen; and identifying an abnormality in the analyzing apparatus based on a measurement result obtained by performing a same analysis process as an analysis process performed on the intermediate product as well as the analysis process to be verified for abnormality.

The abnormality identifying method includes: a removal step of performing a same process as a removal process of removing an unreacted substance in a reaction vessel, from among the analysis processes with respect to the specimen, after dispensing the reagent in the reaction vessel; a measuring step of measuring an amount of luminescence after performing a same analysis process as an analysis process in which the intermediate product becomes able to emit light and enabling the reagent to emit light; and an abnormality identifying step of determining that there is an abnormality in the removal process from among the analysis processes with respect to the specimen, if a measurement result in the measuring step does not satisfy a tolerance based on an amount of luminescence of the reagent that has been obtained beforehand at the time of normal operation of the analyzing apparatus.

In the abnormality identifying method a first removal process and a second removal process are performed as the removal process, and the removing step is one of: a first removing step of performing a same process as the first removal process; a second removing step of performing a same process as the second removal process; and a third removing step of performing a same process as the first removal process and a same process as the second removal process.

In the abnormality identifying method, in the abnormality identifying step, when the removing step is the first removing step, it is determined that there is an abnormality in the first removal process from among the analysis processes with respect to the specimen if a first amount of luminescence measured in the measuring step does not satisfy the tolerance; when the removing step is the second removing step, it is determined that there is an abnormality in the second removal process from among the analysis processes with respect to the specimen if a second amount of luminescence measured in the measuring step does not satisfy the tolerance; and when the removing step is the third removing step, it is determined that there is an abnormality in the first removal process and/or the second removal process from among the analysis processes with respect to the specimen if a third amount of luminescence measured in the measuring step does not satisfy the tolerance.

The abnormality identifying method includes a computing step of computing, using the first, second, and third amounts of luminescence, relative values for the respective amounts of luminescence and in the abnormality identifying step it is determined that there is the abnormality in the first removal process and/or the second removal process based on the relative values computed in the computing step.

In the abnormality identifying method in the abnormality identifying step, the abnormality detail in the removal process is identified based on a dispersion value and an average value of the first, second, and/or third amounts of luminescence obtained by repeating the removing step and the measuring step a plurality of times.

In the abnormality identifying method, the reagent maintains a bonded state between a labeled antibody and a magnetic particle and has a same function as the intermediate product produced during the analysis processes of analyzing the specimen based on an amount of luminescence.

An analyzing apparatus according to the present invention, which analyzes a specimen based on an optical measurement, cancels, for a reagent having a same function as an intermediate product produced during analysis processes, a predetermined analysis process other than an analysis process to be verified for abnormality from among analysis processes with respect to the specimen; and identifies an abnormality in the analyzing apparatus based on a measurement result obtained by performing a same analysis process as an analysis process performed on the intermediate product as well as the analysis process to be verified for abnormality.

The analyzing apparatus includes: a removing unit that carries out a same process as a removal process of removing an unreacted substance in a reaction vessel from among the analysis processes with respect to the specimen, after the reagent is dispensed in the reaction vessel; a measuring unit that measures an amount of luminescence after performing a same analysis process as an analysis process in which the intermediate product becomes able to emit light and enabling the reagent to emit light; and an abnormality identifying unit that determine that there is an abnormality in the removal process from among the analysis processes with respect to the specimen, if a measurement result by the measuring unit does not satisfy a tolerance based on an amount of luminescence that has been obtained beforehand at the time of normal operation of the analyzing apparatus.

In the analyzing apparatus a first removal process and a second removal process are performed as the removal process, and the removing unit performes a same process as the first removal process, a same process as the second removal process, or both of the same process as the first removal process and the same process as the second removal process, with respect to the reagent.

In the analyzing apparatus, the abnormality identifying unit: determines that there is an abnormality in the first removal process from among the analysis processes with respect to the specimen, when the same process as the first removal process is performed by the removing unit and a first amount of luminescence measured by the measuring unit does not satisfy the tolerance; determines that there is an abnormality in the second removal process from among the analysis processes with respect to the specimen, when the same process as the second removal process is performed by the removing unit and a second amount of luminescence measured by the measuring unit does not satisfy the tolerance; and determines that there is an abnormality in the first removal process and/or the second removal process from among the analysis processes with respect to the specimen, when both of the same process as the first removal process and the same process as the second removal processes are executed by the removing unit and a third amount of luminescence measured by the measuring unit does not satisfy the tolerance.

The analyzing apparatus includes: a computing unit that computes, using the first, second, and third amounts of luminescence, relative values for the respective amounts of luminescence, and the abnormality identifying unit determines that there is the abnormality in the first removal process and/or the second removal process based on the relative values computed by the computing unit.

In the analyzing apparatus, the abnormality identifying unit identifies the abnormality detail in the removal process based on a dispersion value and an average value of the first, second, and third amounts of luminescence obtained by repeating the processes by the removing unit and measuring unit a plurality of times.

In the analyzing apparatus, the reagent maintains a bonded state between a labeled antibody and a magnetic particle and has a same function as the intermediate product produced during the analysis processes of analyzing the specimen based on an amount of luminescence.

A reagent according to the present invention is **characterized in that** the reagent maintains a bonded state between a labeled antibody and a magnetic particle, and has a same function as an intermediate product produced during analysis processes of immunologically analyzing a specimen based on an amount of luminescence.

In the reagent, the bonded state is maintained by covalent bonding, bonding due to antigen-antibody reaction, avidin-biotin bonding, ABC bonding, hydrophobic bonding, and hydrogen bonding.

### EFFECT OF THE INVENTION

According to the present invention, because for a reagent having a same function as an intermediate product produced during analysis processes, a predetermined analysis process other than an analysis process to be verified for abnormality is canceled from among analysis processes with respect to a specimen, and abnormality in an analyzing apparatus is identified based on a measurement result obtained by executing a same analysis process as an analysis process executed with respect to the intermediate product as well as the analysis process to be verified for abnormality, the abnormality in the analyzing apparatus can be identified accurately and easily.

### BRIEF DESCRIPTION OF DRAWINGS

FIG. 1 is a schematic diagram of a configuration of an analyzing apparatus according to a first embodiment.
FIG. 2 is an explanatory diagram for a reagent used in FIG. 1.
FIG. 3 is an explanatory diagram for a reagent used in FIG. 1.
FIG. 4 is a flowchart of procedural steps of an abnormality identifying process in the analyzing apparatus illustrated in FIG. 1.
FIG. 5 shows procedural steps of an abnormality identifying measurement process shown in FIG. 4.
FIG. 6 is an explanatory diagram for a normal measurement shown in FIG. 5.
FIG. 7 is an explanatory diagram for an abnormality identifying measurement shown in FIG. 5.
FIG. 8 is an example of a table used in the abnormality identifying process shown in FIG. 4.
FIG. 9 is an explanatory diagram for another example of the abnormality identifying measurement process shown in FIG. 4.
FIG. 10 is an explanatory diagram for an abnormality identifying measurement 2A shown in FIG. 9.
FIG. 11 is an explanatory diagram for an abnormality identifying measurement 2B shown in FIG. 9.
FIG. 12 is an example of a table used in the abnormality identifying process shown in FIG. 4.
FIG. 13 is a schematic diagram of a configuration of an analyzing apparatus according to a second embodiment.
FIG. 14 is a flowchart of procedural steps of an abnormality identifying process in the analyzing apparatus illustrated in FIG. 13.
FIG. 15 is an explanatory diagram of an abnormality identifying measurement process shown in FIG. 14.
FIG. 16 shows an arithmetic expression used in a computing process shown in FIG. 14.
FIG. 17 is an example of a table used in the abnormality identifying process shown in FIG. 14.
FIG. 18 shows an example of a result of the computing process shown in FIG. 14.
FIG. 19 shows an example of the result of the computing process shown in FIG. 14.

### REFERENCE SIGNS LIST

- 1, 201: Analyzing apparatus
- 2: Measuring system
- 4, 204: Control system
- 21: Specimen transporting unit
- 21a: Specimen vessel
- 21b: Specimen rack
- 22: Chip storage unit
- 23: Specimen dispensing/transporting system
- 24: Immune reaction table
- 24a: Outer circumference line
- 24b: Intermediate circumference line
- 24c: Inner circumference line
- 25: BF table
- 26: First reagent storage unit
- 27: Second reagent storage unit
- 28: First reagent dispensing/transporting system
- 29: Second reagent dispensing/transporting system
- 30: Enzyme reaction table
- 31: Photometric system
- 32: First cuvette transporting system
- 33: Second cuvette transporting system
- 41, 241: Control unit
- 42, 242: Process controller
- 43: Input unit
- 44: Analyzing unit
- 45, 245: Identifying unit
- 46: Storage unit
- 47: Output unit
- 48: Transmitting/receiving unit

### BEST MODE(S) FOR CARRYING OUT THE INVENTION

An analyzing apparatus according to embodiments of the present invention is explained below with reference to the accompanying drawings, and is exemplified by an analyzing apparatus which performs an immunological test such as an antigen-antibody reaction of a blood sample using a magnetic particle as a solid-phase carrier, from among fields such as biochemical testing and blood transfusion testing. The present invention is not limited to the embodiments. In the description of the drawings, the same reference symbols are used with respect to the same parts.

### First Embodiment

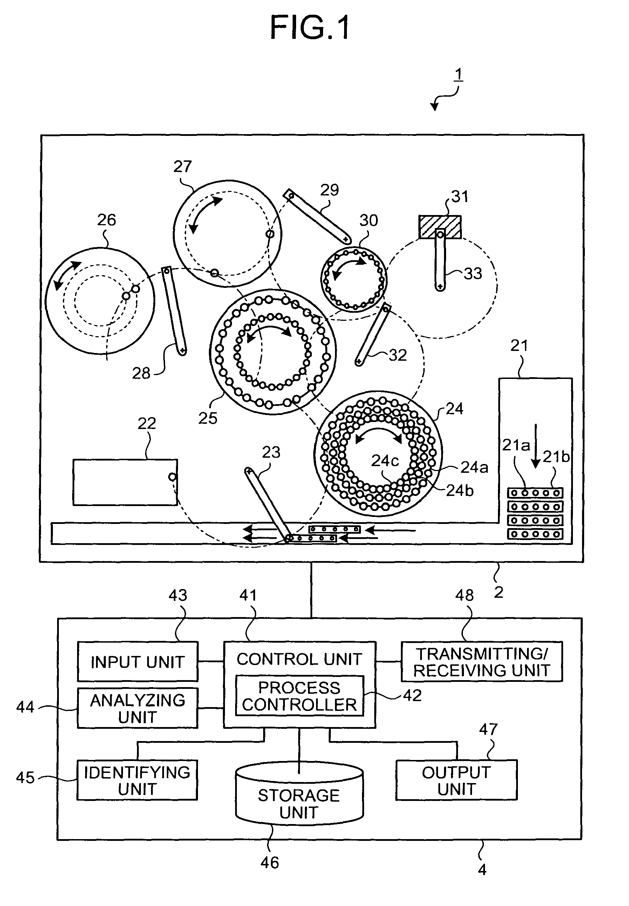

A first embodiment is explained. In the first embodiment, determination of whether there is abnormality in a BF cleaning process of removing an unreacted substance in a reaction vessel, from among analysis processes with respect to a specimen is explained. In the first embodiment, the determination of whether there is an abnormality in the bound-free cleaning is made easily and accurately, using an abnormality identifying reagent which has a same function as an intermediate product produced during the analysis processes with respect to the specimen. FIG. 1 is a schematic diagram of a configuration of the analyzing apparatus according to the first embodiment. As illustrated in FIG. 1, the analyzing apparatus 1 according to the first embodiment includes a measuring system 2 that measures luminescence generated by a reaction between the specimen and a reagent, a control system 4 that controls the whole analyzing apparatus 1 including the measuring system 2 and analyzes a result of measurement in the measuring system 2. The analyzing apparatus 1 automatically performs immunological analysis on a plurality of specimens through cooperation between these two systems.

The measuring system 2, roughly partitioning, includes a plate specimen transporting unit 21, a chip storage unit 22, a specimen dispensing/transporting system 23, an immune reaction table 24, a BF table 25, a first reagent storage unit 26, a second reagent storage unit 27, a first reagent dispensing/transporting system 28, a second reagent dispensing/transporting system 29, an enzyme reaction table 30, a photometric system 31, a first cuvette transporting system 32, and a second cuvette transporting system 33. Each structural part of the measuring system 2 includes a single unit or a plurality of units that performs/perform a predetermined operation/process. The control system 4 includes a control unit 41, an input unit 43, an analyzing unit 44, an identifying unit 45, a storage unit 46, an output unit 47, and a transmitting/receiving unit 48. Each of these parts of the measuring system 2 and the control system 4 are electrically connected to the control unit 41.

The measuring system 2 is explained. The specimen transporting unit 21 holds a plurality of specimen vessels 21a that contain a specimen and includes a plurality of specimen racks 21b sequentially transported in a direction of an arrow illustrated in the drawing. The specimen contained in the specimen vessels 21a is blood or urine or the like sampled from a donor of the specimen.

The chip storage unit 22 has a chip case arranged therein in which a plurality of chips are aligned and the chips are provided from this chip casing. The chip is placed on a tip of a nozzle of the specimen dispensing/transporting system 23 and is a disposable sample chip that is changed every time a specimen is dispensed, for preventing carry-over when measuring infectious disease items.

A probe that sucks and discharges the specimen is attached to a distal end of specimen dispensing/transporting system 23 and the specimen dispensing/transporting system 23 includes an arm that freely performs lifting up/down in a vertical direction and rotation about a vertical line as the central axis that passes a proximal end of the specimen dispensing/transporting system 23. The specimen dispensing/transporting system 23 sucks, through the probe, the specimen in the specimen vessel 21a transported by the specimen transporter 21 to a predetermined position, turns the arm, dispenses the specimen in a cuvette that has been transported to a predetermined position by the BF table 25 to transfer the specimen into the cuvette on the BF table 25 at a predetermined timing.

The immune reaction table 24 includes reaction lines for reacting, in the cuvettes each arranged thereon, the specimen and a predetermined reagent corresponding to an analysis item. The immune reaction table 24 is freely rotatable for each reaction line about a vertical line as being its rotational axis passing through a center of the immune reaction table 24 and transports the cuvette that has been arranged on the immune reaction table 24 at a predetermined timing to a predetermined position. The immune reaction table 24, as illustrated in FIG. 1, may form a triple reaction line structure including an outer circumference line 24a for pre-treatment or pre-dilution, an intermediate circumference line 24b for an immune reaction between the specimen and a solid-phase carrier reagent, and an inner circumference line 24c for an immune reaction between the specimen and a labeling reagent.

The BF table 25 performs the BF cleaning process to carry out BF (bound-free) separation, in which an unreacted substance in the specimen or a reagent is separated by sucking/discharging a predetermined cleaning liquid. The BF table 25 is freely rotatable for each reaction line about a vertical line as its rotational axis passing through the center of the BF table 25 and transports a cuvette placed on the BF table 25 to a predetermined position at a predetermined timing. The BF table 25 has a magnetic collecting system that magnetically collects magnetic particle carriers necessary for the BF separation, a BF cleaning nozzle that performs the BF separation, and a stirring system that disperses the magnetically collected carriers. The BF table 25, after injecting in a reaction vessel the abnormality identifying reagent, performs a same process as the BF cleaning process for removing an unreacted substance in a reaction vessel, from among a series of analysis processes performed on the specimen. A first BF cleaning process and a second BF cleaning process are performed as the BF cleaning process at the BF table 25, and different BF cleaning nozzles and magnetic collecting systems may be used for these first and second BF cleaning processes.

The first reagent storage unit 26 is capable of storing a plurality of reagent vessels containing a first reagent to be dispensed in the cuvette placed on the BF table 25. The second reagent storage unit 27 is capable of storing a plurality of reagent vessels containing a second reagent to be dispensed in the cuvette placed on the BF table 25. The first reagent storage unit 26 and second reagent storage unit 27 are freely rotatable clockwise and anti-clockwise by being driven by a driving system not illustrated, and transport a desired reagent vessel to a reagent suction position of the first reagent dispensing/transporting system 28 or second reagent dispensing/transporting system 29.

A probe for sucking and discharging the first reagent is attached to a distal end of the first reagent dispensing/transporting system 28, and the first reagent dispensing/transporting system 28 includes an arm that freely performs lifting up/down in a vertical direction and rotation about a vertical line as a central axis that passes a proximal end of the first reagent dispensing/transporting system 28. The first reagent dispensing/transporting system 28 sucks, with the probe, a reagent inside a reagent vessel that has been transported to a predetermined position by the first reagent storage unit 26, turns the arm, and dispenses in the cuvette that has been transported to a predetermined position by the BF table 25.

The second reagent dispensing/transporting system 29 is structured similarly to the first reagent dispensing/transporting system 28, and sucks, with a probe, a reagent in a reagent vessel that has been transported to a predetermined position by the second reagent storage unit 27, turns an arm, and dispenses in the cuvette that has been transported to a predetermined position by the BF table 25.

The enzyme reaction table 30 is a reaction line for performing an enzyme reaction that produces light in the cuvette to which a substrate liquid is dispensed. The photometric system 31 measures luminescence from a reaction liquid. The photometric system 31, for example, includes a photomultiplier that detects slight luminescence generated through chemiluminescence and measures an amount of luminescence. The photometric system 31 includes an optical filter and calculates true luminescence intensity from a measured value that has been subjected to extinction by the optical filter depending on the luminescence intensity.

The first cuvette transporting system 32 includes an arm that performs lifting up/down in a vertical direction and free rotation about a vertical line as a central axis passing through a proximal end of the arm, and transports the cuvette containing a liquid at a predetermined timing to predetermined positions of the immune reaction table 24, the BF table 25, the enzyme reaction table 30, a cuvette providing unit not illustrated, and a cuvette disposing unit not illustrated. The second cuvette transporting system 33 includes an arm that performs lifting up/down in a vertical direction and free rotation about a vertical line as a central axis passing through a proximal end of the arm, and transports the cuvette containing a liquid at a predetermined timing to predetermined positions of the enzyme reaction table 30, the photometric system 31, and the cuvette disposing unit not illustrated.

The control system 4 is explained next. The control system 4 is realized by a single or a plurality of computer systems and connected to the measuring system 2. The control system 4 uses various programs related to processes by the analyzing apparatus 1 to control operation/process by the measuring system 2 and analyze measurement results from the measuring system.

The control unit 41 is configured by a CPU or the like having a control function, and controls processing and operation of each structural element of the analyzing apparatus 1. The control unit 41 performs predetermined input/output control with respect to information input/output to/from each of these structural elements and predetermined information processing on the information. The control unit 41 controls the analyzing apparatus 1 by reading out a program stored by the storage unit 46 from a memory. The control unit 41 includes a process controller 42.

The analyzing apparatus 1 identifies an abnormality in the analyzing apparatus based on a measurement result obtained by, for a reagent having a same function as an immune complex that is an intermediate product produced during analysis processes with respect to a specimen, canceling, a predetermined analysis process other than an analysis process to be verified for the abnormality from among the analysis processes with respect to the specimen and performing a same analysis process as that performed with respect to the immune complex as well as the analysis process to be verified for abnormality.
The process controller 42, when performing an abnormality identifying process, controls each system to cancel the predetermined process other than the analysis process to be verified for abnormality from among a series of analysis processes performed on the specimen to be analyzed and to perform the same analysis process as that performed on the immune complex as well as the analysis process to be verified for abnormality. In the first embodiment, to determine whether there is an abnormality in the BF cleaning process at the BF table 25, the process controller 42 controls each system to cancel the predetermined analysis process other than a reagent dispensing process and the BF cleaning process from among the series of analysis processes performed on the specimen to be analyzed, and to perform the same analysis process as that performed on the immune complex as well as the BF cleaning process.

The input unit 43 is configured by a keyboard for inputting various information, a mouse for pointing at an arbitrary position on a display screen of a display of an output unit 47, and the like, and obtains from outside various information necessary for analysis of the specimen, instruction information for analyzing operations, and the like. The analyzing unit 44 performs the analysis processes and the like on the specimen based on measurement results obtained from the measuring system 2.

The identifying unit 45 identifies the abnormality in the analyzing apparatus by canceling, for the reagent having the same function as the immune complex, the predetermined analysis process other than the BF cleaning process to be verified for the abnormality from among the analysis processes with respect to the specimen, and identifies the abnormality in the analyzing apparatus based on the measurement result obtained by performing the same analysis process as that performed on the immune complex as well as the analysis process to be verified for the abnormality. The identifying unit 45 determines, from among the analysis processes with respect to the specimen, that there is an abnormality in the BF cleaning process, when the measurement result by the photometric system 31 does not satisfy a tolerance based on an amount of luminescence of a reagent that is obtained beforehand when the analyzing apparatus is operating normally.

The storage unit 46 is configured by a hard disk that magnetically stores information, and a memory that loads and electrically stores various programs related to the processes performed by the analyzing apparatus 1 when the analyzing apparatus 1 performs the processes and electrically stores the programs, and the storage unit 46 stores various information including an analysis result of the specimen. The storage unit 46 may include an auxiliary storage capable of reading information stored on a recording medium such as a CD-ROM, a DVD-ROM, and a PC card. The storage unit 46 stores the tolerance that has been set based on the amount of luminescence of the reagent obtained beforehand at the time of normal operation of the analyzing apparatus.

The output unit 47 is configured by a display, a printer, a speaker, and the like and outputs various information related to the analysis under the control by the process controller 42. The transmitting/receiving unit 48 functions as an interface that transmits/receives information in a predetermined format via a communication network not illustrated.

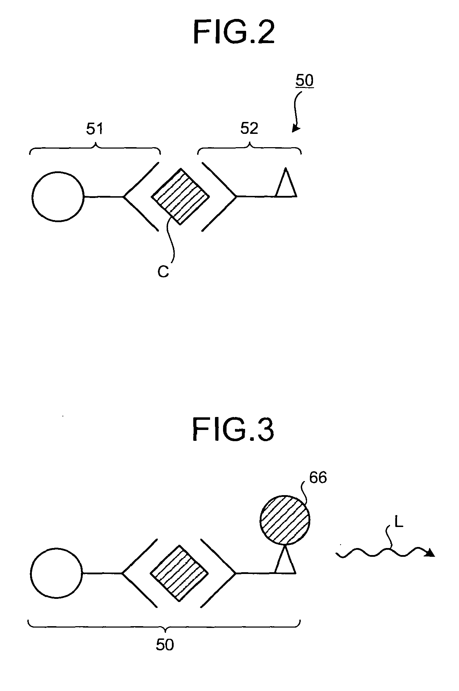

The abnormality identifying reagent used in the analyzing apparatus 1 is explained next. As illustrated in FIG. 2, a reagent 50 for identifying an abnormality maintains a bonded state C between a magnetic particle 51 and a labeled antibody 52. The reagent 50 maintains the bonded state C between the magnetic particle 51 and the labeled antibody 52 with any one of covalent bonding, bonding due to antigen-antibody reaction, avidin-biotin bonding, ABC bonding, hydrophobic bonding, and hydrogen bonding. The reagent 50 has a same function as an immune complex that is an intermediate product produced during analysis processes performed on a specimen by the analyzing apparatus 1. Specifically, the reagent 50 has the same function as the immune complex formed of the magnetic particle and the labeled antibody bonded via an antigen included in the specimen. As illustrated in FIG. 3, the reagent 50, in a same manner as the immune complex, has a function of bonding with an enzyme 66 via an enzyme reaction after injection of a substrate liquid and emitting light L.

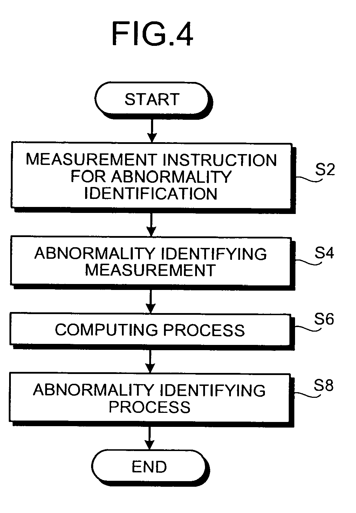

Procedural steps of an abnormality identifying process by the analyzing apparatus 1 are now explained with reference to FIG. 4. The input unit 43 performs a measurement instructing process for identifying an abnormality of inputting to the control unit 41 the instruction information instructing abnormality identification in a predetermined BF cleaning process under operation by an operator (step S2). Each system of the measuring system 2, under control by the process controller 42, cancels the predetermined analysis process other than the BF cleaning process, and performs an abnormality identifying measurement process of detecting the luminescence after carrying out the same analysis process as that performed on the immune complex as well as the BF cleaning process (step S4). The identifying unit 45 performs a computing process of executing computation by a predetermined computing method on a measurement result obtained in the abnormality identifying measurement process (step S6). The identifying unit 45 performs an abnormality identifying process of determining whether there is an abnormality in the BF cleaning process or not based on whether a result obtained in the computing process satisfies the predetermined tolerance or not (step S8).

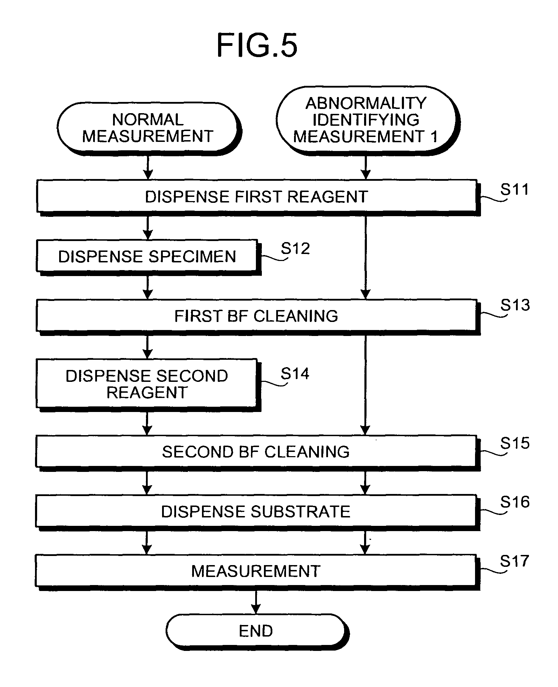

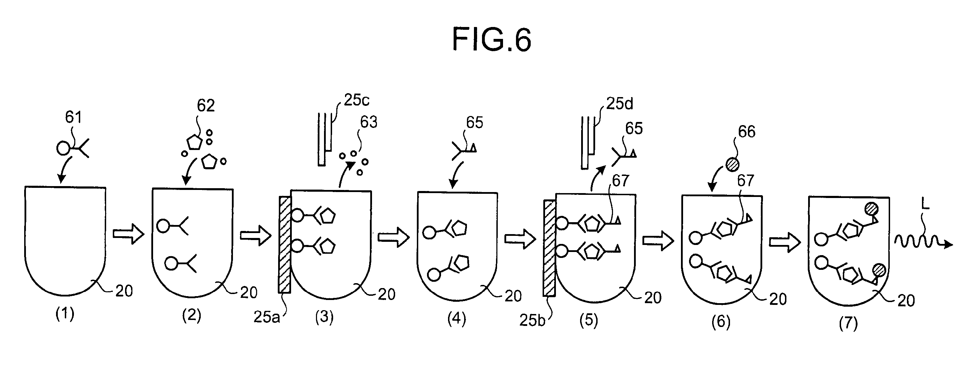

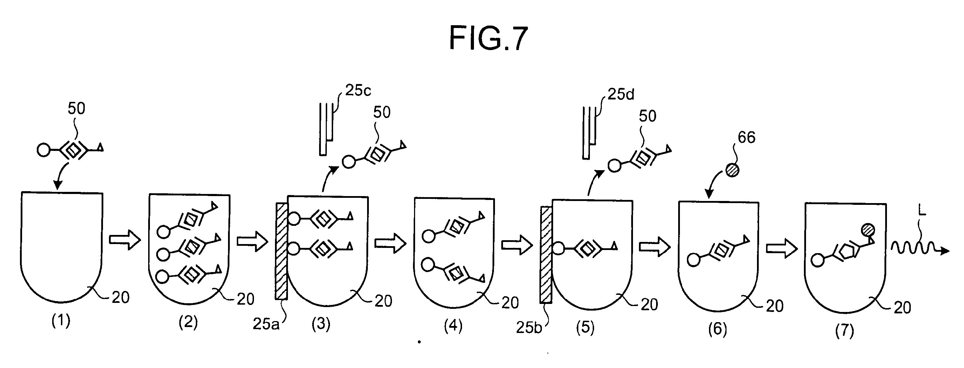

Next, an abnormality identifying measurement 1 for determining whether or not there is an abnormality in the first BF cleaning process and the second BF cleaning process, from among the abnormality identifying measurement shown in FIG. 4, is explained with reference to FIGS. 5 to 7. FIG. 5 shows procedural steps of the abnormality identifying measurement 1 shown in FIG. 4. In FIG. 5, a normal measurement performed on a normal specimen is also shown, together with the abnormality identifying measurement. FIG. 6 is an explanatory diagram of the normal measurement shown in FIG. 5, and FIG. 7 is an explanatory diagram of the abnormality identifying measurement 1 shown in FIG. 5.

In the normal measurement, as shown in FIG 5 and FIG. 6 (1), from the cuvette providing unit not illustrated in FIG. 1, a cuvette 20, which is a reaction vessel, is transported by the first cuvette transporting system 32 to a predetermined position of the BF table 25, and the first reagent dispensing/transporting system 28 performs a first reagent dispensing process of dispensing the first reagent including magnetic particles 61 into the cuvette 20 (step S11). After that, as shown in FIG. 6 (2), the specimen dispensing/transporting system 23, onto which a chip supplied from the chip storage unit 22 is attached, performs a specimen dispending process of dispensing the specimen 62 into the cuvette 20 on the BF table 25 from the specimen vessel 21a that has been transported to a predetermined position by the specimen transporting unit 21 (step S12). After being subjected to stirring by the stirring system of the BF table 25, the cuvette 20 is transported to the intermediate circumference line 24b of the immune reaction table 24 by the first cuvette transporting system 32. In this case, magnetic particle carriers each formed of the antigen and the magnetic particle in the specimen 62 bonded together are produced.

After a certain reaction time passes, the cuvette 20 is transported to the BF table 25 by the first cuvette transporting system 32, and a first BF cleaning process in which the magnetic collection of the magnetic particle carriers by a magnetic collecting system 25a of the BF table 25 and the BF separation by a BF cleaning nozzle 25c are carried out as illustrated in FIG. 6 (3) (step S13). As a result, as illustrated in FIG. 6 (3), an unreacted substance 63 in the cuvette 20 is removed.

As illustrated in FIG. 6 (4), a second reagent dispensing process of dispensing a labeling reagent including a labeled antibody 65 that is the second reagent by the second reagent dispensing/transporting system 29 into the cuvette 20 that has been subjected to the DF separation and stirring by the stirring system is performed (step S14). As a result, immune complexes 67 each formed of the magnetic particle carrier and the labeled antibody 65 bonded together are produced. After that, the cuvette 20 is transported to the inner circumference line 24c of the immune reaction table 24 by the first cuvette transporting system 32, and after a certain reaction time passes, transported to the BF table 25.

As illustrated in FIG. 6 (5), a second BF cleaning process with respect to the cuvette 20, in which magnetic collection of the magnetic particle carriers by a magnetic collecting structure 25b and the BF separation by a BF cleaning nozzle 25d are carried out is performed (step S15). As a result, as illustrated in FIG. 6 (5), the labeled antibody 65 that is not bonded with the magnetic particle carrier is removed from the cuvette 20.

A substrate dispensing process of dispensing and stirring again the substrate liquid including the enzyme 66 is performed on the cuvette 20 (step S16). Next, after being transported to the enzyme reaction table 30 by the first cuvette transporting system 32, and after a certain reaction time necessary for the enzyme reaction passes, the cuvette 20 is transported to the photometric system 31 by the second cuvette transporting system 33. As the enzyme 66 and the immune complex 67 are bonded together through the enzyme reaction, light L is emitted from the immune complex 67. A measurement process of measuring the light L emitted from the cuvette with the photometric structure 31 is performed (step S17). In the normal measurement, to detect an amount of the antigen to be analyzed that is included in the specimen, after letting the antigen bond with the magnetic particle, the labeled antibody and the magnetic particle carrier are then bonded together to produce the immune complex, light is generated by reacting the immune complex with the enzyme, and a quantity of this light generated is measured. The analyzing unit 44 calculates an amount of antigen according to the quantity of light measured.

As explained, in the normal analysis processes performed on the specimen, the first reagent dispending process (step S11), the specimen dispensing process (step S12), the first BF cleaning process (step S13), the second reagent dispensing process (step S14), the second BF cleaning process (step S15), the substrate dispensing process (step S16), and the measurement process (step S17) are carried out.

In the abnormality identifying measurement 1 performed to determine whether or not there is abnormality in the first and second BF cleaning processes, as illustrated in FIG. 5 and FIG. 7 (1), the first reagent dispensing process of dispensing the reagent illustrated in FIG. 2 as the first reagent, instead of the first reagent including the magnetic particles 61 dispensed in the normal measurement is carried out (step S11).

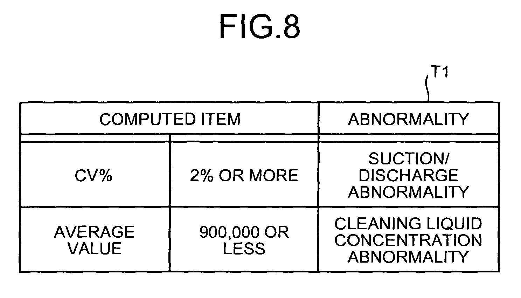

In the abnormality identifying measurement 1, as illustrated in FIG. 7 (2), since the reagent 50 has the same function as the immune complex 67, it is not required to perform the specimen dispensing process (step S12) of dispensing the specimen including the antigen. In the abnormality identifying measurement 1, as illustrated in FIG. 8 (3), the first BF cleaning process, which is the target of abnormality identification, is carried out (step S13). When the first BF cleaning process is being carried out normally, the reagent 50 including the magnetic particles in the cuvette 20 will not be magnetically collected by the magnetically collecting system 25a for removal. If the first BF cleaning process is not being carried out normally because of a function of the magnetic collecting system 25a being degraded, or an abnormality in the cleaning by the BF cleaning nozzle 25c, some of the reagent 50 may be removed.

In the abnormality identifying measurement 1, as illustrated in FIG. 7 (4), since the reagent 50 has the same function as the immune complex 67, it is not required to perform the second reagent dispensing process of dispensing the second reagent including the labeled antibody (step S14). In the abnormality identifying measurement 1, as illustrated in FIG. 7 (5), the second BF cleaning process, which is the target of abnormality identification is carried out (step S15). When the second BF cleaning process is being performed normally, the reagent 50 including the magnetic particles will not be magnetically collected by the magnetic collecting system 25b for removal. If the second BF cleaning process is not being carried out normally because of a function of the magnetic collecting structure 25b being degraded, or an abnormality in the cleaning done by the BF cleaning nozzle 25d, some of the reagent 50 in the cuvette 20 may be removed.

As illustrated in FIG. 7 (6), in the abnormality identifying measurement 1, the substrate dispensing process of dispensing the substrate including the enzyme 66 is dispensed in the cuvette 20 in the same manner as the normal measurement (step S16). The reagent 50, through the enzyme reaction, is bonded with the enzyme 66, in the same manner as the immune complex 67 illustrated in FIG. 6 (6) and generates light L. As illustrated in FIG. 7 (7), in the abnormality identifying measurement 1, the measurement process of measuring the light L emitted from the reagent 50 is carried out (step S17).

In the abnormality identifying measurement 1, the reagent 50 having the same function as the immune complex 67 is dispensed first. Accordingly, in the abnormality identifying measurement 1, it is not required to carry out a process of forming the magnetic particle carrier in which the magnetic particle is bonded with the antigen in the specimen, which is required to form the immune complex, and a process of forming the immune complex in which the magnetic particle carrier is bonded with the labeled antibody. Therefore, in the abnormality identifying measurement 1, the amount of luminescence can be measured by canceling other processes related to the process of forming the magnetic particle carrier and the process of forming the immune complex, and carrying out only the first and second BF cleaning processes to be identified for any abnormality. Consequently, the identifying unit 45 is not required to consider causes related to abnormality in the other processes and thus able to accurately verify the abnormality with respect to the first and second BF cleaning processes only.

A computing process shown in FIG. 4 is explained. The abnormality identifying measurement 1 is repeated a plurality of times. That is, the first reagent dispensing process, the first BF cleaning process, the second BF cleaning process, the substrate dispensing process, and the measurement process of the abnormality identifying measurement 1 are repeated a plurality of times so that a plurality of amounts of luminescence are obtained. In the computing process shown in FIG. 4, the identifying unit 45 performs a computation on the plurality of amounts of luminescence obtained through the abnormality identifying measurement 1 carried out a plurality of times and obtains a dispersion value and an average value of the amounts of luminescence. The dispersion value is represented by a CV% obtained by dividing a standard deviation of the plurality of luminescence amount measurement results by the average value of the amounts of luminescence.

An abnormality identifying process shown in FIG. 4 is explained. The identifying unit 45 determines that there is an abnormality in the first and second BF cleaning processes, if the dispersion value and the average value of the amounts of luminescence obtained in the computing process do not satisfy tolerances that have been set based on amounts of luminescence of the reagent 50 obtained beforehand at the time of normal operation of the analyzing apparatus 1. The identifying unit 45 refers to a table T1 exemplified in FIG. 8 stored in the storage unit 46 as preset tolerances, to carry out the abnormality identifying process. In the table T1, tolerances for the CV%, which is the dispersion value of the amounts of luminescence, and the average value of the amounts of luminescence, and details of the abnormality that can be identified if each tolerance is not satisfied, are shown. The tolerances are each set, based on results of measurement performed beforehand with respect to the reagent 50 by the analyzing apparatus 1 when the analyzing apparatus 1 is operating normally, as a range in which the analyzing apparatus is able to output clinically non-problematic measurement results.

Herein, when the CV% is large means when the amounts of luminescence have high dispersion. In this case, the first BF cleaning process and/or the second BF cleaning process that have/has been performed a plurality of times are considered to have included a BF cleaning process in which the reagent 50, which is not naturally removed in the BF cleaning processes, has been removed much. For a situation in which the reagent 50 naturally not removed happens to be removed a lot, a situation in which the nozzle for sucking/discharging the cleaning liquid in the BF cleaning process hits the magnetically collecting region and thereby the reagent 50 that has been magnetically collected is freed and sucked by the nozzle to be removed from the cuvette 20, or a situation in which the reagent is removed because of variation in amounts of the cleaning liquid sucked/discharged by the nozzle, may be thought of as a cause. For example, when the tolerance of CV% has been set to be less than 2%, the identifying unit 45, if the CV% obtained in the calculating process is less than 2%, as shown in table T1, determines that there is no suction/discharge abnormality in the nozzle in the first and second cleaning processes. If the CV% obtained in the computing process is equal to or greater than 2%, the identifying unit 45, as shown in table T1, determines that there is a suction/discharge abnormality in the nozzle in the first and/or second cleaning processes.

If the average value of the amounts of luminescence is small, it is considered that the reagent 50, which naturally should not be removed, is removed a lot in each first BF cleaning process and/or each second BF cleaning process that have/has been carried out a plurality of times. For a situation in which the reagent 50 naturally not removed happens to be removed a lot in each BF cleaning process, a situation in which the reagent 50 that has been magnetically collected is freed and removed from the cuvette 20 due to concentration abnormality in the cleaning liquid, may be thought of as a cause. For example, when the tolerance for the average value is set to be equal to or greater than 900,000 cp/s, the identifying unit 45, as shown in table T1, if the average value obtained in the measurement process is equal to or greater than 900,000 cp/s, determines that there is no concentration abnormality in the cleaning liquid in the first and second BF cleaning processes. If the average value obtained in the measurement process is less than 900,000 cp/s, the identifying unit 45, as shown in table T1, determines that there is a concentration abnormality in the cleaning liquid in the first BF cleaning process and/or second BF cleaning process. Besides the concentration abnormality in the cleaning liquid, foreign material contamination in the cleaning liquid, magnetism degradation of the magnetic collection system of the BF table, and the like, may be thought of as a cause of the naturally not removed reagent 50 being removed a lot in each BF cleaning process.

As explained above, in the abnormality identifying measurement, the analyzing apparatus 1 according to the first embodiment can cancel the analysis processes required for forming the immune complex, from among the analysis processes with respect to the specimen, by using the reagent 50 having the same function as the immune complex 67 formed during the analysis processes with respect to the specimen. Specifically, in the abnormality identifying measurement, the analyzing apparatus 1 is able to obtain the amounts of luminescence from the reagent by performing only the same analysis processes as the analysis processes performed on the immune complex 67 in addition to the first and second BF cleaning processes to be identified for abnormality, and identifies the details of abnormality. In other words, the analyzing apparatus 1, by using the reagent 50, is able to cancel the analysis processes required for the formation of the immune complex 67, and thus is not required to consider the causes related to the abnormality in the cancelled processes and is able to accurately verify the abnormality with respect to the first and second BF cleaning processes only. In the analyzing apparatus 1, since whether or not there is abnormality in the BF cleaning process can be determined using the measurement result measured by the photometric structure 31, it is not required to carry out colorimetric measurements used in a conventionally required spectrophotometer separate from the analyzing apparatus main body. Therefore, according to the first embodiment, it is possible to identify the abnormality in the analyzing apparatus accurately and easily.

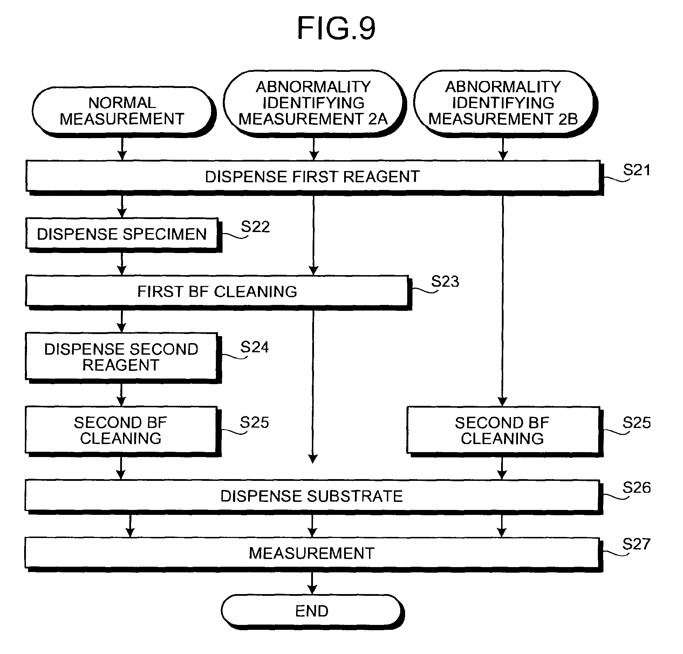

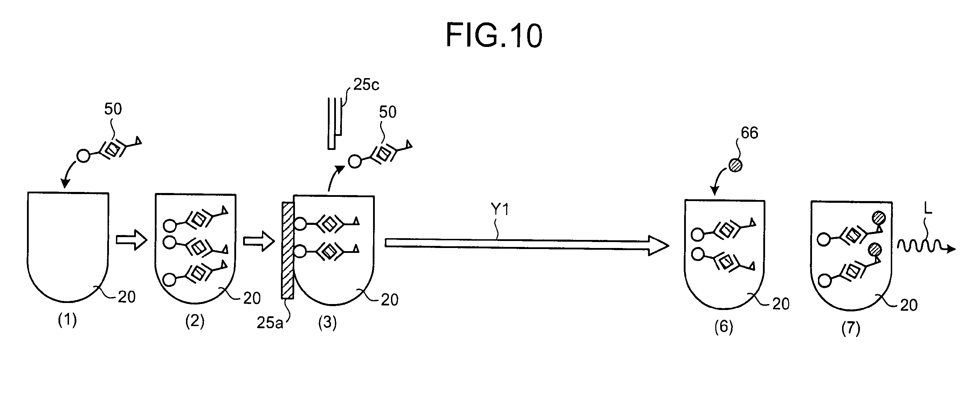

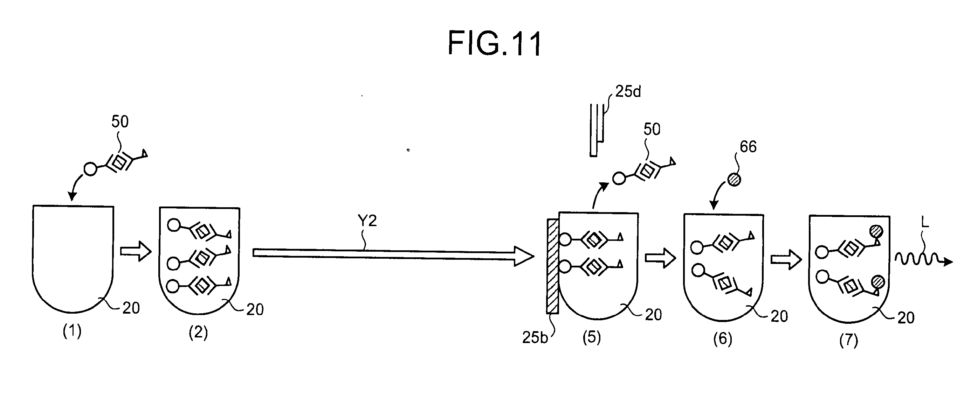

In the first embodiment, as the abnormality identifying measurement shown in FIG. 4, the abnormality identifying measurement 1 of identifying the abnormality in the BF cleaning process by performing both the first and second BF cleaning processes has been explained so far, but the details of the abnormality may be identified more particularly by carrying out only the first or second BF cleaning process. An abnormality identifying measurement 2A for identifying abnormality in the first BF cleaning process and an abnormality identifying measurement 2B for identifying abnormality in the second BF cleaning process are now explained with reference to FIGS. 9 to 11. In FIG. 9, a normal measurement performed on a normal specimen is also shown, together with the abnormality identifying measurements 2A and 2B. FIG. 10 is an explanatory diagram of procedural steps of the abnormality identifying measurement 2A, and FIG. 11 is an explanatory diagram of procedural steps of the abnormality identifying measurement 2B.

The abnormality identifying measurement 2A is explained. As illustrated in FIG. 9 and FIG. 10 (1), in the abnormality identifying measurement 2A, similarly to the abnormality identifying measurement 1, a first reagent dispensing process is performed, in which the reagent 50 illustrated in FIG. 2, instead of a first reagent including a magnetic particle 61 dispensed in a first reagent dispensing process (step S21) of the normal measurement, is dispensed as a first reagent (step S21). In the abnormality identifying measurement 2A, as illustrated in FIG. 9 and FIG. 10(2), a specimen dispensing process (step S22) of the normal measurement is cancelled similarly to the abnormality identifying measurement 1. In the abnormality identifying measurement 2A, as illustrated in FIG. 10 (3), a first BF cleaning process (step S23) to be identified for abnormality is performed. In the abnormality identifying measurement 2A, as indicated by an arrow Y1 in FIG. 10, a second reagent dispensing process (step S24) of the normal measurement is cancelled, followed by cancellation of a second BF cleaning process (step S25) which is not the target of abnormality identification. As illustrated in FIG. 10 (6), in the abnormality identifying measurement 2A, similarly to the normal measurement, a substrate dispensing process in which a substrate including the enzyme 66 is dispensed is carried out (step S26), and a measurement process in which light L emitted by the reagent 50 bonded with the enzyme 66 is measured is carried out (step S27). In the abnormality identifying measurement 2A, for the BF cleaning process, the second BF cleaning process is cancelled, and only the first BF cleaning process that is the target of abnormality identification is carried out.

The abnormality identifying measurement 2B is now explained. In the abnormality identifying measurement 2B, as illustrated in FIG. 9 and FIG. 11 (1), similarly to the abnormality identifying measurements 1 and 2A, a first reagent dispensing process of dispensing the reagent 50 illustrated in FIG. 2 as a first reagent is performed (step S21). In the abnormality identifying measurement 2B, as illustrated in FIG. 9 and FIG. 11 (2), and indicated by an arrow Y2 in FIG. 11, a specimen dispensing process (step S22), a first BF cleaning process (step S23) not to be identified for abnormality, and a second reagent dispensing process (step S24) are cancelled. As illustrated in FIG. 11 (5), in the abnormality identifying measurement 2B, after the second BF cleaning process (step S25), which is the target of abnormality identification, as shown in FIG. 11 (6), a substrate dispensing process is carried out (step S26), and a measurement process of measuring light L emitted by the reagent 50 that has been bonded with the enzyme 66 is carried out (step S27). In the abnormality identifying measurement 2B, for the BF cleaning process, the first BF cleaning process is canceled, and only the second BF cleaning process to be identified for abnormality is performed.

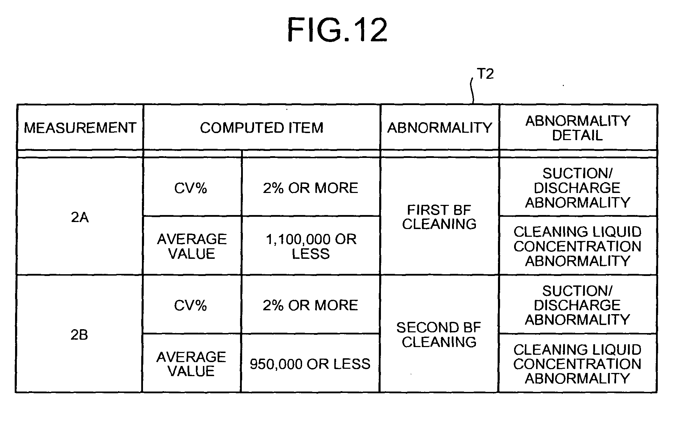

In the computing process shown in FIG. 4, the identifying unit 45 performs computation on a plurality of measurement results obtained by carrying out the abnormality identifying measurements 2A and 2B a plurality of times to obtain a dispersion value and an average value of amounts of luminescence. In the abnormality identifying process shown in FIG. 4, the identifying unit 45 refers to a table T2 exemplified in FIG. 12 stored in the storage unit 46 for preset tolerances, to carry out the abnormality identifying process.

The abnormality identifying process for the abnormality identifying measurement 2A is explained. In the abnormality identifying measurement 2A, besides the first reagent dispensing process, the substrate dispensing process, and the measurement process, since only the first BF cleaning process is performed, if a measurement result does not satisfy a tolerance, it can be determined that a cause is in the first BF cleaning process.

When a tolerance for CV% is set to be less than 2% for example, the identifying unit 45, as shown in table T2, determines that there is a suction/discharge abnormality in a nozzle in the first BF cleaning process, if CV% obtained in the computing process is equal to or greater than 2%. When a tolerance for the average value is set to be equal to or greater than 1,100,000 cp/s for example, the identifying unit 45 determines that there is a concentration abnormality in a cleaning liquid of the first BF cleaning process if the average value obtained in the computing process is less than 1,100,000 cp/s as shown in table T2.

When the abnormality identifying measurement 2B is performed, besides the first reagent dispensing process, the substrate dispensing process, and the measurement process, because only the second BF cleaning process is carried out, if a measurement result does not satisfy a tolerance, it can be determined that a cause is in the second BF cleaning process. When the abnormality identifying measurement 2B is performed, as shown in table T2, the identifying unit 45 determines that there is a suction/discharge abnormality in a nozzle in the second BF cleaning process if a CV% obtained in the computing process is equal to or greater than 2%, and determines that there is a concentration abnormality in a cleaning liquid in the second BF cleaning process if the average value obtained in the computing process is less than 950,000 cp/s.

As explained above, when it is to be determined whether or not there is an abnormality in either one of the first and second BF cleaning processes, the abnormality identifying measurement may be carried out in which only the BF cleaning that is the target of identification is carried out using the reagent 50 having the same function as the immune complex 67, omitting the other BF cleaning. The analyzing apparatus 1 determines whether or not there is an abnormality in the BF cleaning process by performing any one of the abnormality identifying measurements 1, 2A, and 2B.

### Second Embodiment

A second embodiment is explained. The first embodiment described above shows the example in which the details of the abnormality are identified using an absolute value of the amounts of luminescence that are the measurement results. On the other hand, in the second embodiment, a relative value of amounts of luminescence that are measurement results is obtained to carry out abnormality identification even more accurately.

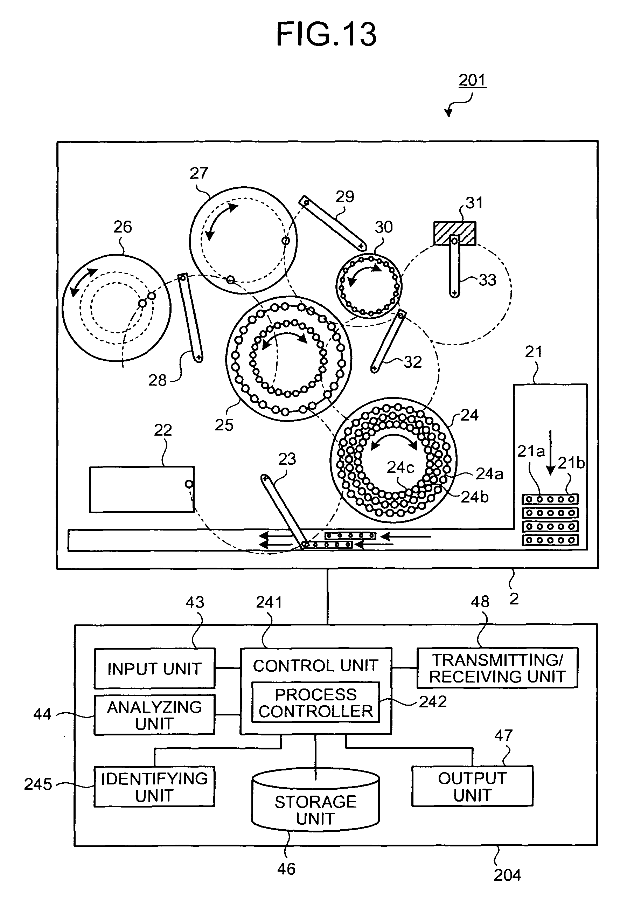

FIG. 13 is a schematic diagram of a configuration of an analyzing apparatus according to the second embodiment. As illustrated in FIG. 13, the analyzing apparatus 201 according to the second embodiment, in contrast to the analyzing apparatus 1 illustrated in FIG. 1, includes a control system 204 including a control unit 241 including a process controller 242 instead of the control unit 42, and an identifying unit 245 instead of the identifying unit 45. The process controller 242 lets each system of the measuring system 2, as abnormality identifying measurement, perform three types of abnormality identifying processes each having a different combination of BF cleaning processes. The identifying unit 245 computes a relative value of an amount of luminescence of each measurement result obtained in the different three types of abnormality identifying processes and identifies abnormality in a BF cleaning process based on each relative value.

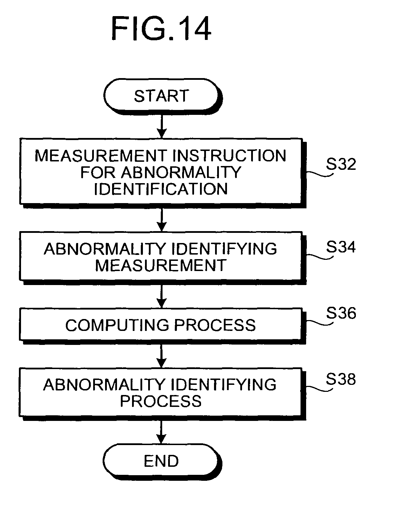

With reference to FIG. 14, procedural steps of an abnormality identifying process by the analyzing apparatus 201 are explained. The input unit 43, through operation by an operator, performs an abnormality identifying measurement instructing process of inputting to the control unit 41 instruction information instructing abnormality identification of a BF cleaning process (step S32). Each system of the measurement system 2, under control by the process controller 242, carries out the three types of abnormality identifying measurement processes in which a predetermined analysis process other than the BF cleaning process is canceled, and a same analysis process as an analysis process performed on an immune complex as well as the BF cleaning process, are carried out, followed by detection of luminescence (step S34). The identifying unit 245 performs a computing process of computing a relative value of each amount of luminescence based on each measurement result measured in the abnormality identifying measurement process (step S36). The identifying unit 245 performs an abnormality identifying process of determining whether or not there is an abnormality in the BF cleaning process based on whether or not each relative value obtained in the computing process satisfies a predetermined tolerance (step S38).

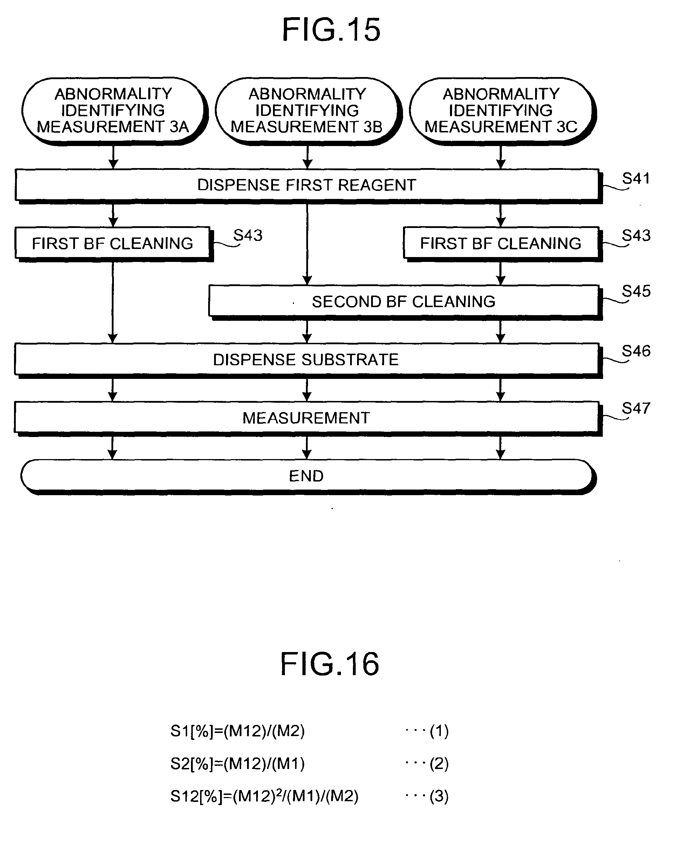

With reference to FIG. 15, three types of abnormality identifying measurements shown in FIG. 14 are explained. As shown in FIG. 15, the analyzing apparatus 201 carries out abnormality identifying measurements 3A, 3B, and 3C as the abnormality identifying measurements. In the abnormality identifying measurement 3A, similarly to the abnormality identifying measurement 2A in the first embodiment, after a first reagent dispensing process (step S41) of dispensing the reagent 50 illustrated in FIG. 2, only a first BF cleaning process is performed (step S43), and a substrate dispensing process (step S46) and a measurement process (step S47) are performed. In the abnormality identifying measurement 3B, similarly to the abnormality identifying measurement 2B in the first embodiment, after a first reagent dispensing process (step S41) of dispensing the reagent 50 illustrated in FIG. 2, only a second BF cleaning process is performed (step S45), and a substrate dispensing process (step S46) and a measurement process (step S47) are carried out. In the abnormality identifying measurement 3C, after a first reagent dispensing process (step S41) of dispensing the reagent 50 illustrated in FIG. 2, both of the first BF cleaning process (step S43) and the second BF cleaning process (step S45) are carried out, and a substrate dispensing process (step S46) and a measurement process (step S47) are executed. That is, the process control unit 242 lets the measurement systems 2 carry out the three types of abnormality identifying measurements 3A, 3B, and 3C as the abnormality identifying measurements, in which the first BF cleaning process, the second BF cleaning process, or the first and second cleaning processes are executed.

A computing process shown in FIG. 14 is explained. The identifying unit 245 computes the relative value of an amount of luminescence for each abnormality identifying measurement, based on an amount of luminescence M1 obtained in the abnormality identifying measurement 3A, an amount of luminescence M2 obtained in the abnormality identifying measurement 3B, and an amount of luminescence M12 obtained in the abnormality identifying measurement 3C.

Specifically, as indicated by equation (1) in FIG. 16, S1 [%], which is the relative value of the amount of luminescence in the abnormality identifying measurement 3A in which only the first BF cleaning process is executed, is obtained by dividing the amount of luminescence M12 in the abnormality identifying measurement 3C in which the first and second BF cleaning processes are executed by the amount of luminescence M2 in the abnormality identifying measurement 3B in which only the second BF cleaning process is executed. That is, S1 is obtained by excluding a result of execution of the second BF cleaning process from a result of execution of the first and second BF cleaning processes.

Further, as indicated by equation (2) in FIG. 16, S2 [%], which is the relative value of the amount of luminescence in the abnormality identifying measurement 3A in which only the second BF cleaning process is executed, is obtained by dividing the amount of luminescence M12 in the abnormality identifying measurement 3C in which the first and second BF cleaning processes are executed by the amount of luminescence M1 in the abnormality identifying measurement 3A in which only the first BF cleaning process is executed. That is, S2 is obtained by excluding a result of execution of the first BF cleaning process from a result of execution of the first and second BF cleaning processes.

Further, as indicated by equation (3) in FIG. 16, S12 [%], which is the relative value of the amount of luminescence M12 in the abnormality identifying measurement 3C in which the first and second BF cleaning processes are executed, is obtained by dividing a square of the amount of luminescence M12 in the abnormality identifying measurement 3C in which the first and second BF cleaning processes are executed by the amount of luminescence M1 in the abnormality identifying measurement 3A in which only the first BF cleaning process is executed and the amount of luminescence M2 of the abnormality identifying measurement 3B in which only the second BF cleaning process is executed. That is, S12 is obtained by excluding results of execution of the first BF cleaning process and the second BF cleaning process from a result of execution of the first and second BF cleaning processes. The identifying unit 245, in the computing process, executes computation on each relative value obtained by repeating a plurality of times to obtain a CV% that is a dispersion value for each relative value S1, S2, and S12, and an average value. The identifying unit 245, by using equations (1) to (3), is able to obtain the relative values from which variable factors due to degradation of the reagent or the like are removed even if the amounts of luminescence vary in each abnormality identifying measurement because of the degradation of the reagent 50 or the like.

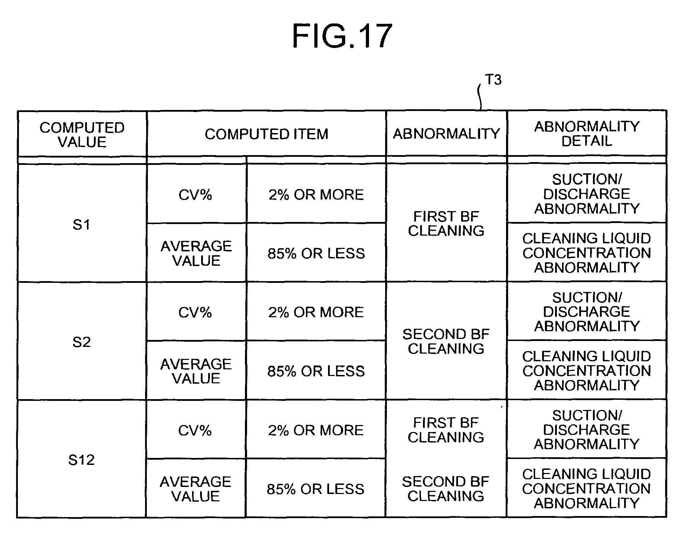

An abnormality identifying process in FIG. 14 is explained. The identifying unit 245 executes the abnormality identifying process by referring to a table T3 exemplified in FIG. 17 as preset tolerances, which has been obtained beforehand at the time the analyzing apparatus 201 is operating normally. As shown in table T3, if a CV% of S1 is equal to or greater than 2%, the identifying unit 245 determines that there is a suction/discharge abnormality in a nozzle in the first BF cleaning process, and if an average value of S1 is equal to or less than 85%, determines that there is a concentration abnormality in a cleaning liquid in the first BF cleaning process. If a CV% of S2 is equal to or greater than 2%, the identifying unit 245 determines that there is a suction/discharge abnormality in a nozzle of the second BF cleaning process, and if an average value of S2 is equal to or less than 85%, determines that there is a concentration abnormality in a cleaning liquid in the second BF cleaning process. If a CV% of S12 is equal to or greater than 2%, the identifying unit 245 determines that there is a suction/discharge abnormality in a nozzle of the first and second BF cleaning processes, and if an average value of S12 is equal to or less than 85%, determines that there is a concentration abnormality in a cleaning liquid in the first and second cleaning processes.

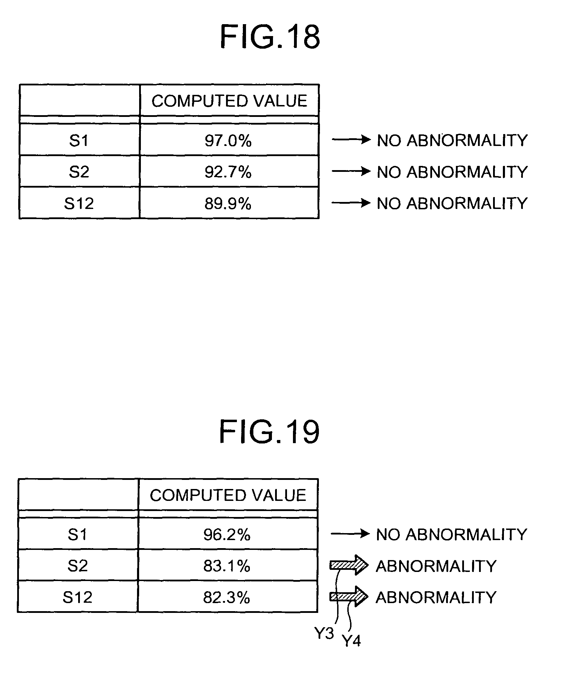

For example, as shown in FIG. 18, the identifying unit 245 determines that there is no abnormality in the concentration of a cleaning liquid in the first and second cleaning processes if each of S1 to S12 is equal to or greater than 85%. As shown in FIG. 19, the identifying unit 245 determines that there is an abnormality in the concentration of the cleaning liquid in the second BF cleaning process as indicated by an arrow Y3 if S2 is greater than 85%, and determines that there is an abnormality in the concentration of the cleaning liquid in the first and second BF cleaning processes, if S12 is greater than 85%, as indicated by an arrow Y4.

According to the second embodiment, an abnormality can be even more accurately identified as compared to the first embodiment, because the abnormality is identified based on the relative values from which variable factors of the amounts of luminescence due to degradation of the reagent 50 or the like used in the abnormality identifying measurements have been removed.

In the first and second embodiments, the cases of using the reagent 50 have been explained, but the abnormality identifying measurements and the identifying processes may be carried out using the immune complex 67 itself which is the intermediate product produced during the analysis processes with respect to a normal specimen. If the latter is the case, tolerances may be set based on measurement results obtained beforehand using the immune complex 67 when the analyzing apparatus 1 or 201 is operating normally.

The analyzing apparatuses explained in the above embodiments may be realized by executing a program provided beforehand by a computer system such as a personal computer or a work station. The computer system implements the processes/operations of the analyzing apparatuses by reading and executing the program recorded on a predetermined recording medium. The predetermined recording medium includes various recording media in which a program readable by a computer system is recorded, such as "portable physical media" including a flexible disk (FD), a CD-ROM, an MO disk, a DVD disk, a magneto-optical disk, and an IC card, as well as "communication media" that hold a program for a short term upon transmission of the program, including a hard disk drive (HDD) included inside/outside a computer system. The computer system obtains a program from another computer system connected via a network, and executes the obtained program to implement the processes/operations of the analyzing apparatuses.

### INDUSTRIAL APPLICABILITY

As described above, an analyzing apparatus according to the present invention is useful for a medical analyzing apparatus that does not include a colorimetric measuring unit, and in particular for obtaining abnormality in the analyzing apparatus easily and quickly.

## Claims

1. An abnormality identifying method of identifying an abnormality detail in an analyzing apparatus that analyzes a specimen based on optical measurement, the method comprising: for a reagent having a same function as an intermediate product produced during analysis processes,
canceling a predetermined analysis process other than an analysis process to be verified for abnormality from among analysis processes with respect to the specimen; and
identifying an abnormality in the analyzing apparatus based on a measurement result obtained by performing a same analysis process as an analysis process performed on the intermediate product as well as the analysis process to be verified for abnormality.

2. The abnormality identifying method according to claim 1, further comprising:
a removal step of performing a same process as a removal process of removing an unreacted substance in a reaction vessel, from among the analysis processes with respect to the specimen, after dispensing the reagent in the reaction vessel;
a measuring step of measuring an amount of luminescence after performing a same analysis process as an analysis process in which the intermediate product becomes able to emit light and enabling the reagent to emit light; and
an abnormality identifying step of determining that there is an abnormality in the removal process from among the analysis processes with respect to the specimen, if a measurement result in the measuring step does not satisfy a tolerance based on an amount of luminescence of the reagent that has been obtained beforehand at the time of normal operation of the analyzing apparatus.

3. The abnormality identifying method according to claim 2, wherein a first removal process and a second removal process are performed as the removal process, and the removing step is one of a first removing step of performing a same process as the first removal process, a second removing step of performing a same process as the second removal process, and a third removing step of performing a same process as the first removal process and a same process as the second removal process.

4. The abnormality identifying method according to claim 3, wherein in the abnormality identifying step,
when the removing step is the first removing step, it is determined that there is an abnormality in the first removal process from among the analysis processes with respect to the specimen if a first amount of luminescence measured in the measuring step does not satisfy the tolerance;
when the removing step is the second removing step, it is determined that there is an abnormality in the second removal process from among the analysis processes with respect to the specimen if a second amount of luminescence measured in the measuring step does not satisfy the tolerance; and
when the removing step is the third removing step, it is determined that there is an abnormality in the first removal process and/or the second removal process from among the analysis processes with respect to the specimen if a third amount of luminescence measured in the measuring step does not satisfy the tolerance.

5. The abnormality identifying method according to claim 4, comprising a computing step of computing, using the first, second, and third amounts of luminescence, relative values for the respective amounts of luminescence, wherein
in the abnormality identifying step it is determined that there is the abnormality in the first removal process and/or the second removal process based on the relative values computed in the computing step.

6. The abnormality identifying method according to claim 4, wherein in the abnormality identifying step, the abnormality detail in the removal process is identified based on a dispersion value and an average value of the first, second, and/or third amounts of luminescence obtained by repeating the removing step and the measuring step a plurality of times.

7. The abnormality identifying method according to claim 1, wherein the reagent maintains a bonded state between a labeled antibody and a magnetic particle and has a same function as the intermediate product produced during the analysis processes of analyzing the specimen based on an amount of luminescence.

8. An analyzing apparatus that analyzes a specimen based on an optical measurement, wherein the analyzing apparatus cancels, for a reagent having a same function as an intermediate product produced during analysis processes, a predetermined analysis process other than an analysis process to be verified for abnormality from among analysis processes with respect to the specimen; and
identifies an abnormality in the analyzing apparatus based on a measurement result obtained by performing a same analysis process as an analysis process performed on the intermediate product as well as the analysis process to be verified for abnormality.

9. The analyzing apparatus according to claim 8, comprising:
a removing unit that carries out a same process as a removal process of removing an unreacted substance in a reaction vessel from among the analysis processes with respect to the specimen, after the reagent is dispensed in the reaction vessel;
a measuring unit that measures an amount of luminescence after performing a same analysis process as an analysis process in which the intermediate product becomes able to emit light and enabling the reagent to emit light; and
an abnormality identifying unit that determines that there is an abnormality in the removal process from among the analysis processes with respect to the specimen, if a measurement result by the measuring unit does not satisfy a tolerance based on an amount of luminescence that has been obtained beforehand at the time of normal operation of the analyzing apparatus.

10. The analyzing apparatus according to claim 9, wherein a first removal process and a second removal process are performed as the removal process, and the removing unit performs a same process as the first removal process, a same process as the second removal process, or both of the same process as the first removal process and the same process as the second removal process, with respect to the reagent.

11. The analyzing apparatus according to claim 10, wherein the abnormality identifying unit
determines that there is an abnormality in the first removal process from among the analysis processes with respect to the specimen, when the same process as the first removal process is performed by the removing unit and a first amount of luminescence measured by the measuring unit does not satisfy the tolerance;
determines that there is an abnormality in the second removal process from among the analysis processes with respect to the specimen, when the same process as the second removal process is executed by the removing unit and a second amount of luminescence measured by the measuring unit does not satisfy the tolerance; and
determines that there is an abnormality in the first removal process and/or the second removal process from among the analysis processes with respect to the specimen, when both of the same process as the first removal process and the same process as the second removal processes are executed by the removing unit and a third amount of luminescence measured by the measuring unit does not satisfy the tolerance.

12. The analyzing apparatus according to claim 11, comprising:
a computing unit that computes, using the first, second, and third amounts of luminescence, relative values for the respective amounts of luminescence, wherein
the abnormality identifying unit determines that there is the abnormality in the first removal process and/or the second removal process based on the relative values computed by the computing unit.

13. The analyzing apparatus according to claim 11, wherein the abnormality identifying unit identifies the abnormality detail in the removal process based on a dispersion value and an average value of the first, second, and third amounts of luminescence obtained by repeating the processes by the removing unit and measuring unit a plurality of times.

14. The analyzing apparatus according to claim 8, wherein the reagent maintains a bonded state between a labeled antibody and a magnetic particle and has a same function as the intermediate product produced during the analysis processes of analyzing the specimen based on an amount of luminescence.

15. A reagent **characterized in that** the reagent maintains a bonded state between a labeled antibody and a magnetic particle, and has a same function as an intermediate product produced during analysis processes of immunologically analyzing a specimen based on an amount of luminescence.

16. The reagent according to claim 15, wherein the bonded state is maintained by covalent bonding, bonding due to antigen-antibody reaction, avidin-biotin bonding, ABC bonding, hydrophobic bonding, and hydrogen bonding.
